# EUROPEAN PATENT APPLICATION

(11) **EP 4 513 595 A1**
(43) Date of publication of application: **26.02.2025**
(21) Application number: 23861707.0
(22) Date of filing: 28.06.2023
(51) Int. Cl.: H01M 4/583, H01M 4/587, H01M 10/0525, C01B 32/20

(54) **NEGATIVE ELECTRODE MATERIAL AND BATTERY**

(71) Applicant: BTR New Material Group Co., Ltd., Shenzhen, Guangdong 518106 (CN)
(72) Inventor: ZU, Mengyang, Shenzhen, Guangdong 518118 (CN); ZHANG, Meng, Shenzhen, Guangdong 518118 (CN); LI, Zikun, Shenzhen, Guangdong 518118 (CN); HUANG, Jian, Shenzhen, Guangdong 518118 (CN); REN, Jianguo, Shenzhen, Guangdong 518118 (CN)
(74) Representative: Studio Torta S.p.A.
(86) International application number: PCT/CN2023/103384
(87) International publication number: WO 2025/000287

(57) **Abstract**

The present disclosure provides an anode material and a battery. The anode material includes graphite, an interior and/or a surface of the graphite has pores, the anode material has an oil absorption value of O mL/100g, a pore volume of V cm³/kg, a specific surface area of S m²/g, and a powder porosity of Φ%, where 50≤O*V*S≤391, and 40≤Φ≤58. According to the anode material and the battery provided by the present disclosure, a reaction space capable of performing an effective lithium ion de-intercalation in the anode material is relatively sufficient, improving the high-rate charging-discharging performance of the graphite anode material.

## Description

### TECHNICAL FIELD

The present disclosure relates to a field of anode materials, and in particular, to an anode material and a battery.

### BACKGROUND

Graphite has become a mainstream commercial anode material of lithium ion batteries due to advantages such as a high electronic conductivity, a large lithium ion diffusion coefficient, a small volume change in a layered structure before and after a lithium intercalation, a high lithium intercalation capacity, and a low lithium intercalation potential.

As an anode material of a lithium ion battery, graphite materials have many shortcomings: in the lithium ion battery, the liquid absorption performance of a material and a plate on an electrolyte will greatly affect the final performance of the battery. Poor liquid absorption performance of an anode may cause a limited reactive area of a graphite anode material, resulting in insufficient electrochemical active sites, limiting the rate performance of the battery and forming a lithium deposition, thereby deteriorating the rate performance and the capacity of the battery, and seriously affecting the safety and cycle life of the battery. Therefore, the good liquid absorption performance and an effective reactive area of the material have good promotion effects on the rate performance and the capacity of the lithium ion battery.

Therefore, at the current stage of the development of graphite materials, it is difficult to improve one parameter individually and further optimize the rate performance. At present, a deep research needs to be carried out from a synergistic effect of various factors, so that the rate performance of the graphite can be improved to the maximum extent.

### SUMMARY

In view of this, the present disclosure provides an anode material and a battery, which comprehensively consider an synergistic influence of an oil absorption value, a pore volume, a specific surface area and a powder porosity of graphite on the anode material, and develop an anode material, so as to increase active sites and diffusion pathways for a lithium ion de-intercalation in the anode material, and improve high-rate charging-discharging performance of the anode material.

According to a first aspect, the present disclosure provides an anode material. The anode material includes graphite, an interior and/or a surface of the graphite has pores, the anode material has an oil absorption value of O mL/100g, a pore volume of V cm³/kg, a specific surface area of S m²/g, and a powder porosity of Φ%, where 50≤O*V*S≤391, and 40≤Φ≤58. The pore volume is tested by ASAP2460 device from American Micromeritics, and calculated in a pore size range of 17Å to 3000Å by using a model of BJH Desortation cumulative volume of pores.

In some embodiments, the oil absorption value of the anode material is O mL/100g, where 30≤O≤62.

In some embodiments, the pore volume of the anode material is V cm³/kg, where 1.812≤V≤5.012.

In some embodiments, the specific surface area of the anode material is S m²/g, where 0.872≤S≤1.781.

In some embodiments, the particle size of the anode material satisfies a following relational expression: 12µm≤D₅₀≤20µm.

In some embodiments, the anode material further includes amorphous carbon, and the amorphous carbon is located on the surface of the graphite and/or is dispersed between graphite particles.

In some embodiments, a mass proportion of the amorphous carbon in the anode material is 0.1wt% to 5wt%.

In some embodiments, the anode material includes artificial graphite primary particles and/or artificial graphite secondary particles.

In some embodiments, the pores include at least one of micro-pores and meso-pores.

In some embodiments, the anode material is determined by X-ray diffraction, a crystal plane spacing of a plane (002) is d₀₀₂, where 3.358Å≤d₀₀₂≤3.365Å, and a crystal plane stacking thickness Lc obtained by the X-ray diffraction is 400Å to 450Å.

In some embodiments, the anode material is determined by X-ray diffraction, and a ratio of integrated intensity I₀₀₄ of a peak on a plane (004) of the anode material to integrated intensity I₁₁₀ of a peak on a plane (110) of the anode material satisfies a following relational expression: 1.0≤I₀₀₄/I₁₁₀≤5.0.

In a second aspect, the present disclosure provides a battery including the graphite anode material according to the first aspect.

The technical solution of the present disclosure has at least following beneficial effects.

The anode material provided by the present disclosure includes the graphite. An interior and/or a surface of the graphite has pores, and the anode material has the oil absorption value of O mL/100g, the pore volume of V cm³/kg, the specific surface area of S m²/g, and the powder porosity of Φ%, where 50≤O*V*S≤391, and 40≤Φ≤58. On one hand, the powder porosity, a comprehensive property related to factors such as a particle morphology, a particle surface state, a particle size and a particle size distribution, is a parameter having large influences on the powder processing performance, and the proper powder porosity is beneficial to preparation of the graphite anode plate with a certain compaction density, achieving that the graphite anode plate has good performance. On the other hand, a large pore volume can increase a diffusion pathway of Li⁺, and a large specific surface area can ensure a sufficient electrochemical reaction interface, promoting the diffusion of lithium ions in a solid-liquid interface and a solid phase, reducing a concentration polarization, and improving the capacity and the rate performance of the anode material. However, merely meeting the proper pore volume and specific surface area, there is still significant improvement space for the rate performance of the anode material, which is because the lithium ion de-intercalation not only requires the diffusion pathway and the reaction interface, but also requires an electrolyte as a medium. Some pores cannot be infiltrated by the electrolyte due to the influence of a surface morphology or other factors, and cannot play the role, and thus the corresponding surfaces cannot undergo an electrochemical reaction naturally, which is equivalent to an insufficient "effective electrochemical reaction space". An infiltration capacity of the electrolyte is usually reflected by the oil absorption value. In the present disclosure, extensive experiments are conducted on the combination of the pore volume, the specific surface area, and the oil absorption value. The O*V*S of the anode material is controlled within the above range while controlling the powder porosity of the material, so that the anode material has a sufficient reaction space that is beneficial to the lithium ion de-intercalation, thereby improving the high-rate charging-discharging performance of the graphite anode material.

### BRIEF DESCRIPTION OF DRAWINGS

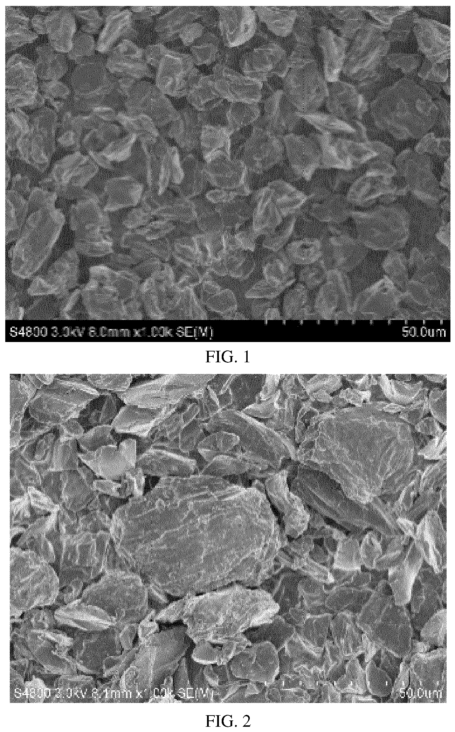

FIG. 1 is a scanning electron microscope image of a graphite anode material according to Example 11 of the present disclosure.
FIG. 2 is a scanning electron microscope image of a graphite anode material according to Example 12 of the present disclosure.

### DESCRIPTION OF EMBODIMENTS

In order to better illustrate the present disclosure and facilitate the understanding of technical solutions of the present disclosure, the present disclosure will be further described in detail below. However, following examples are only simple examples of the present disclosure, and do not represent or limit the protection scope of the present disclosure, which shall be defined by the claims.

The present disclosure discloses an anode material. The anode material includes graphite, and an interior and/or a surface of the graphite has pores. The anode material has an oil absorption value of O mL/100g, a pore volume of V cm³/kg, a specific surface area of S m²/g, and a powder porosity of Φ%, where 50≤O*V*S≤391, and 40≤Φ≤58. The pore volume is tested by ASAP2460 device from American Micromeritics, and calculated in a pore size range of 17Å to 3000Å by using a model of BJH Desortation cumulative volume of pores.

An interior and/or a surface of the graphite has pores, and the anode material has the oil absorption value of O mL/100g, the pore volume of V cm³/kg, the specific surface area of S m²/g, and the powder porosity of Φ%, where 50≤O*V*S≤391, and 40≤Φ≤58.

Generally, particles with a larger pore volume can increase a diffusion pathway of Li⁺, and a larger specific surface area can ensure a sufficient electrochemical reaction interface, promoting a diffusion of lithium ions in a solid-liquid interface and a solid phase, reducing a concentration polarization, and improving the capacity and the rate performance of the anode material. However, merely meeting the proper pore volume and specific surface, there is still significant improvement space for the rate performance of the anode material, which is because a lithium ion de-intercalation not only requires a diffusion pathway and a reaction interface, but also requires an electrolyte as a medium. The lithium ions diffuse through the electrolyte to achieve a purpose of the lithium ion de-intercalation and lithium storage. Lithium storage modes of the lithium ions include the diffusion of the lithium ions among graphite layers to achieve the lithium storage along with an lithium edge storage and a lithium surface storage. The lithium storage between graphite layers is an intercalation process in which the lithium ions are intercalated between the graphite layers from high order to low order. Carbon atoms exposed at an edge end of a graphite sheet are in an amorphous state with high energy, are active sites of the lithium ions, facilitating the lithium edge storage. The bonding of the carbon atoms and the lithium ions on the graphite surface is similar to the lithium edge storage, achieving the lithium surface storage. Some pores cannot be infiltrated by the electrolyte due to the influence of a surface morphology, a pore pathway structure or other factors, and thus cannot play their role. Due to a capillary action, a part of the electrolyte is infiltrated into the pores between the graphite particles at first, and a part of the electrolyte is infiltrated into the pores at the surface or interior of the graphite particles at the same time. However, the pore volume or the specific surface area commonly used in the prior art is only explored on a number of single increased pores. According to a diffusion mechanism of the lithium ions in the electrolyte and the graphite particles, the applicant discovered that there are still a part of closed pores in the graphite particles, and there are also the carbon atoms at the defect end of the closed pores that can be used for a lithium ion reaction, forming the lithium edge storage. However, in practical processes, due to the difficulty in accurately characterizing the closed pores, the impact of closed pores on the properties of the graphite materials is often overlooked. In addition, there are also pores distributed at the surface and interior of the graphite. In addition to reacting with the lithium ions to realize the lithium edge storage, the carbon at the defect end of the pores can further be infiltrated by the electrolyte due to the capillary phenomena, but the degree of infiltration varies due to differences in pore structure and depth. Furthermore, after the pores between the particles are infiltrated, the external surface active sites of the graphite particles are relatively large, and a solid electrolyte interface is formed on the surfaces of the particles. However, if a relatively large quantity of electrolyte cations are aggregated on the surfaces of the graphite particles, the concentration polarization is prone to occur, inhibiting the diffusion of the lithium ions. In such cases, the surfaces of the graphite particles cannot undergo an electrochemical reaction, resulting in insufficient "effective electrochemical reaction space". In summary, the morphology and distribution of pores (including open pores and closed pores) have a significant impact on the lithium storage mode of the graphite particles and the surface/internal infiltration of the graphite particles. Meanwhile, the surfaces and surface openings of the graphite particles also have certain influence on the pores between the graphite particles formed by the graphite particle accumulation mode, so that the infiltration capability and the lithium storage mode of the graphite particles are further reflected. In the present disclosure, extensive experiments are conducted on the combination of the pore volume, the specific surface area, and the oil absorption value. The O*V*S of the anode material is controlled within the above range while controlling the powder porosity Φ of the material. The pores characteristics among the graphite particles, the surface morphology of the graphite particles, the open pore structures and the internal pore structures of the surfaces, and the closed pore characteristics are deeply explored, enlarging a diffusion pathway of the lithium ions, allowing for a rapidly internal transmission of the lithium ions through the surface and the internal pore pathway in the graphite particles after the graphite particles are fully infiltrated by electrolyte, reducing polarization caused by excessive electrolyte adsorbed and infiltrated on the surface, ultimately enhancing the continuous capability for further improving the transmission rate of the lithium ions and the rapid transmission rate of the lithium ions. Thus, the anode material has a sufficient reaction space that is beneficial to the lithium ion de-intercalation, improving the high-rate charging-discharging performance of the graphite anode material.

In some embodiments, the oil absorption value of the anode material is O mL/100g, where 30≤O≤62, e.g., 30, 35, 40, 45, 50, 55, or 60, which is not limited herein. The oil absorption value of the material is controlled within the above range, improving the adsorption and infiltration performance of the material to the electrolyte, and achieving good electrochemical performance of the anode material.

In some embodiments, the pore volume of the anode material is V cm³/kg, where 1.812≤V≤5.012, e.g., 1.812, 1.897, 1.945, 2.003, 2.224, 2.675, 2.755, 2.874, 2.807, 3.343, 4.203, or 5.012, which is not limited herein. When electrochemical reactions occur inside the electrode, the pores create more lithium ion diffusion pathways and electrochemical reaction interfaces for the anode material, promoting the diffusion of the lithium ions in the solid-liquid interface and the solid phase, reducing the concentration polarization, and improving the rate performance of the anode material.

In some embodiments, the specific surface area of the anode material is S m/g, where 0.872≤S≤1.781, e.g., 1.781, 1.713, 1.598, 1.501, 1.445, 1.327, 1.308, 1.179, 1.106, 1.007, 0.966, or 0.879, which is not limited herein. It can be understood that an excessively large specific surface area easily results in the formation of the solid electrolyte interface, and consumes too much irreversible lithium salt, thereby reducing the initial efficiency of the battery.

In some embodiments, the powder porosity of the anode material is Φ%, where 40≤Φ≤58, e.g., 40, 41.1, 42.1, 45.9, 44.5, 43.3, 45.5, 47.5, 47.8, 48.3, 50.6, 51.3, 52.2, 52.8, 53.4, 55.1, 55.2, 56.1, 56.2, 56.8, or 57.6, which is not limited herein. It can be understood that controlling the powder porosity of the anode material facilitates improving the compaction density of the electrode plate, improving the sufficient infiltration degree of the graphite particles and the electrolyte, rapidly transmitting the lithium ions inside the graphite through surface and internal pore pathways, and reducing polarization caused by excessive electrolyte adsorption and infiltration on the surface, thereby achieving the better performance of the graphite anode plate.

In some embodiments, the pores includes at least one of the micro-pores and the meso-pores.

In some embodiments, the particle size D₅₀ of the anode material is 12µm to 20µm, e.g., 12µm, 13µm, 14µm, 15µm, 18µm, 19µm, or 20µm, which is not limited herein. It should be noted that a volume reference cumulative particle size distribution measured by a laser diffraction, and D₅₀ represents the particle size corresponding to a cumulative particle size distribution percentage that reaches 50%.

In some embodiments, the anode material further includes amorphous carbon, and a mass ratio of the amorphous carbon in the anode material is 0.1wt% to 5wt%, e.g., 0.1wt%, 0.3wt%, 0.5wt%, 1wt%, 2wt%, 3wt%, 4wt%, or 5wt%. The presence of the amorphous carbon provides more irregular and more open diffusion paths for the lithium ions, improving the rate performance of the material.

In some embodiments, the amorphous carbon is located on a surface of the graphite and/or dispersed among the graphite particles.

In some embodiments, the anode material is determined by X-ray diffraction, a crystal plane spacing of a plane (002) is d₀₀₂, where 3.358Å≤d₀₀₂≤3.365Å, and a crystal plane stacking thickness Lc obtained by the X-ray diffraction is 400 Å to 450 Å. The crystal plane spacing d₀₀₂ is within the above range, and it can be seen that the artificial graphite particles have a high graphite crystalline degree, namely a high graphitization degree and a high capacity of the product.

In some embodiments, the anode material is determined by X-ray diffraction, and a ratio of integrated intensity I₀₀₄ of a peak on a plane (004) of the anode material to integrated intensity I₁₁₀ of a peak on a plane (110) of the anode material satisfies a following relational expression: 1.0≤I₀₀₄/I₁₁₀≤5.0. When I₀₀₄/I₁₁₀ is within this range, the orientation degree of the anode material is relatively high, and the cycle expansion is low.

In some embodiments, the anode material includes artificial graphite primary particles and/or artificial graphite secondary particles. In some embodiments, the pores includes at least one of the micro-pores and the meso-pores.

In some embodiments, the specific capacity of the anode material is 350mAh/g to 365mAh/g, e.g., 350mAh/g, 360mAh/g, or 365mAh/g, which is not limited herein.

The present disclosure further provides a method for preparing an anode material. The method includes following steps.

S10, a coke raw material is shaped to obtain a coke powder having a median particle size of 10µm to 20µm.

S20, a mixture containing the coke powder and a binder is carbonized at 500°C to 200°C to obtain a carbonized product. A mass ratio of the coke powder to the binder is 100:(3 to 15).

S30, the carbonized product is oxidized in an oxygen-containing atmosphere at 300°C to 600°C for 2 hours to 6 hours to obtain a precursor.

S40, the precursor is graphitized at 2800°C to 3200°C to obtain an anode material.

According to the method for preparing the anode material provided by the present disclosure, the coke raw material is shaped to obtain the coke powder, and then the mixture of the coke powder and the binder is subjected to a carbonization treatment. During the carbonization treatment, impurities, volatile components and unstable substances in the coke powder can be decomposed and dissipate. The coke raw material and the binder dynamically existing after carbonization are cured and molded. The carbonized product is then subjected to an oxidation treatment, so that rich micro-pores structures can be formed on the surface of the material. Finally, the precursor is subjected to a graphitization treatment. During high-temperature graphitization treatment, some of the micro-pores structures formed by pre-oxidation continue to expand the pore size and deepen the pore depth with the volatilization of the volatile components in the early stage, increasing the lithium ion diffusion pathways. At the same time, a large number of pores are formed due to the escape of impurities in the raw materials and the volatilization of organic matters. In the later period of high temperature, due to the complete volatilization of the impurities and the organic matters, the arrangement of the impurities and the organic matters is ordered with the arrangement of the carbon atoms at the same time, and the pores of part of pyrolytic carbon begin to shrink and collapse, ultimately resulting in partial closed pores. The remaining part forms the open pore pathway of a developed network structure. As a result, after the graphite particles are fully infiltrated by the electrolyte, the lithium ions are rapidly transported within the graphite through the surface and the internal pore pathway, reducing polarization caused by excessive electrolyte adsorbed and infiltrated on the surface, thereby achieving the continuous ability of further improving the transmission rate of the lithium ions and the rapid transmission rate of the lithium ions. Therefore, the anode material has sufficient reaction space that is beneficial to the lithium ion de-intercalation, improving the high-rate charging-discharging performance of the graphite anode material.

In some embodiments, coke raw material includes at least one of petroleum coke, needle coke, asphalt coke, and isotropic coke.

In some embodiments, the shaping includes at least one of crushing, spheroidizing, or grading.

A median particle size of the shaped coke powder is 10µm to 20µm, e.g., 10µm, 12µm, 13µm, 14µm, 16µm, 18µm, 18.5µm, 19µm, or 20µm, which is not limited to the listed values, and other unlisted values within the numerical range are also applicable. After multiple experiments, it was found that controlling the median particle size of the coke powder within the above range is beneficial for balancing the processing performance, the capacity, and the rate performance.

In some embodiments, a heating rate of the carbonization treatment may specifically be 2°C/min, 3°C/min, 5 °C/min, 6°C/min, 8°C/min, 9°C/min, or 10°C/min. It can be understood that the heating rate of the carbonization treatment is within the above range, which is beneficial to slow escape of volatile components in the raw material, and a preliminary formation of a pore structure, and is combined with the rapid heating of subsequent graphitization process, to obtain an anode material satisfying 50≤O*V*S≤391.

In some embodiments, the temperature of the carbonization treatment may specifically be 500°C, 550°C, 600°C, 700°C, 750°C, 800°C, 850°C, 900°C, 1000°C, or 1200°C, which is not limited to the listed values, and other unlisted values within the numerical range are also applicable. It can be understood that the temperature of the carbonization treatment is within the above range, which is beneficial to discharge of volatile components and the like in the coke powder.

In some embodiments, a holding time of the carbonization treatment may specifically be 2 hours, 3 hours, 4 hours, 4.5 hours, 5 hours, 5.5 hours, or 6 hours, which is not limited to the listed values, and other unlisted values within the numerical range are also applicable. In an embodiment, the holding time of the carbonization treatment may be 3 hours to 4 hours.

In some embodiments, the binder includes at least one of coal asphalt, petroleum asphalt, petroleum resin, phenolic resin, epoxy resin, coumarone resin, and furan resin. In an embodiment, the petroleum asphalt may be petroleum asphalt, modified asphalt, mesophase asphalt, and the like.

In some embodiments, a mass ratio of the coke powder to the binder is 100:(3 to 15), e.g., 100:3, 100:5, 100:8, 100:10, 100:12, 100:13, or 100:15, which is not limited to the listed values, and other unlisted values within the numerical range are also applicable.

In some embodiments, a manner of mixing the mixture includes at least one of mechanical stirring and ultrasonic dispersion. When mechanical stirring is used for mixing, a rotary slurry stirrer, a turbine stirrer, and a flat slurry stirrer may be used, as long as components in the mixture are fully and uniformly mixed.

In some embodiments, a stirring rate ranges from 10r/min to 1000r/min, e.g., 10r/min, 50r/min, 70r/min, 100r/min, 120r/min, 150r/min, 200r/min, 300r/min, 350r/min, 400r/min, 500r/min or 1000r/min, which is not limited herein. The stirring rate is controlled within the above range to facilitate the mixing the components to form a uniform mixture.

The stirring can be carried out at normal temperature or in a preheating state. In an embodiment, the stirring temperature may be controlled at 25°C to 200°C. It can be understood that proper preheating facilitates the mixing of the components to form a uniform mixture.

In some embodiments, the temperature of the oxidation treatment may specifically be 300°C, 350°C, 400°C, 450°C, 500°C, 550°C, or 600°C, which is not limited to the listed values, and other unlisted values within the numerical range are also applicable. It can be understood that the temperature of the oxidation treatment is within the above range, so that a rich and proper amount of the micro-pores structures can be formed on the surface of the material to construct an ideal ion pathway on the surface of the graphite.

In some embodiments, the holding time of the oxidation treatment may specifically be 2 hours, 3 hours, 4 hours, 4.5 hours, 5 hours, 5.5 hours or 6 hours, which is not limited to the listed values, and other unlisted values within the numerical range are also applicable. In an embodiment, the holding time of the oxidation treatment is 3 hours to 4 hours.

In some embodiments, the oxygen-containing atmosphere includes at least one of air and a mixed gas having an oxygen content of 30% or more.

In some embodiments, the heat preservation temperature of the graphitization treatment may specifically be 2800°C, 2850°C, 2900°C, 2950°C, 3000°C, 3100°C, or 3200°C, which is not limited to the listed values, and other unlisted values within the numerical range are also applicable.

In some embodiments, the holding time of the graphitization treatment may specifically be 2 hours, 2.5 hours, 3 hours, 3.5 hours, 3.8 hours, 4 hours, 4.5 hours, or 5 hours, which is not limited to the listed values, and other unlisted values within the numerical range are also applicable. In an embodiment, the holding time of the graphitization treatment is 2 hours to 3 hours.

In some embodiments, the heating rate of the graphitization treatment may be 2°C/min to 10°C/min, e.g., 2°C/min, 3°C/min, 4°C/min, 6°C/min, or 8°C/min, which is not limited to the listed values, and other unlisted values within the numerical range are also applicable. A specific heating rate may facilitate controlling the formation of internal and/or surface pores and specific surface area of the material graphite.

In some embodiments, after the graphitization treatment, at least one of crushing, sieving and demagnetizing is further performed. In an embodiment, after the carbonization treatment, crushing, demagnetizing and sieving are performed in sequence.

In some embodiments, the crushing can be performed by any one of a mechanical crusher, a jet crusher, and a low-temperature crusher.

In some embodiments, the sieving can be performed by any one of a stationary sieve, a drum sieve, a resonance sieve, a roller sieve, a vibrating sieve and a chain sieve. The mesh number for sieving is 100 meshes to 500 meshes, e.g., 100 meshes, 200 meshes, 250 meshes, 325 meshes, 400 meshes, and 500 meshes. The particle size of the anode material is controlled within the above range, which is beneficial to the improvement of the processing performance of the anode material.

In some embodiments, the demagnetizing device is any one of a permanent magnet drum magnetic separator, an electromagnetic iron remover and a pulsating high gradient magnetic separator, and the demagnetizing is to ultimately control the magnetic substance content of the anode material, avoid the discharge effect of the magnetic substance on the lithium ion battery, and ensure the safety of the battery during use.

The present disclosure are further described below through multiple embodiments. The embodiments of the present disclosure are not limited to following specific embodiments. Within the scope of protection, changes can be implemented appropriately.

### Example 1

A method for preparing an anode material of this example included following steps.
(1) A petroleum coke raw material was crushed and shaped with a shaping device to obtain a crushed and shaped coke powder with a median particle size of 15µm.
(2) The coke powder was uniformly mixed with a coal asphalt binder to obtain a mixture, a mass ratio of the coke powder to the binder is controlled to 100:15, and the mixture was carbonized at 1000°C for 10 hours.
(3) The carbonized product was oxidized in an air atmosphere at 600°C for 6 hours to obtain a precursor.
(4) The precursor was loaded into a graphite crucible, and then the graphite crucible was transferred into an Acheson furnace, where it was heated at a rate of 10°C/min to 3000°C and subjected to graphitization treatment at such high-temperature for 8 hours, to obtain a graphite anode material.

### Example 2

A method for preparing an anode material of this example included following steps.
(1) A petroleum coke raw material was crushed and shaped with a shaping device to obtain a crushed and shaped coke powder with a median particle size of 15µm.
(2) The coke powder was uniformly mixed with petroleum asphalt binder to obtain a mixture, a mass ratio of the coke powder to the binder is controlled to 100:13, and the mixture was carbonized at 1000°C for 10 hours.
(3) The carbonized product was oxidized in an air atmosphere at 600°C for 6 hours to obtain a precursor.
(4) The precursor was loaded into a graphite crucible, and then the graphite crucible was transferred into an Acheson furnace, where it was heated at a rate of 8°C/min to 3000°C and subjected to graphitization treatment at such high-temperature for 8 hours, to obtain a graphite anode material.

### Example 3

A method for preparing an anode material of this example included following steps.
(1) A petroleum coke raw material was crushed and shaped with a shaping device to obtain a crushed and shaped coke powder with a median particle size of 15µm.
(2) The coke powder was uniformly mixed with petroleum resin binder to obtain a mixture, a mass ratio of the coke powder to the binder is controlled to 100:11, and the mixture was carbonized at 1000°C for 10 hours.
(3) The carbonized product was oxidized in an air atmosphere at 600°C for 6 hours to obtain a precursor.
(4) The precursor was loaded into a graphite crucible, and then the graphite crucible was transferred into an Acheson furnace, where it was heated at a rate of 6°C/min to 3000°C and subjected to graphitization treatment at such high-temperature for 8 hours, to obtain a graphite anode material.

### Example 4

A method for preparing an anode material of this example included following steps.
(1) A petroleum coke raw material was crushed and shaped with a shaping device to obtain a crushed and shaped coke powder with a median particle size of 15µm.
(2) The coke powder was uniformly mixed with phenolic resin binder to obtain a mixture, a mass ratio of the coke powder to the binder is controlled to 100:9, and the mixture was carbonized at 1000°C for 10 hours.
(3) The carbonized product was oxidized in an air atmosphere at 500°C for 4 hours to obtain a precursor.
(4) The precursor was loaded into a graphite crucible, and then the graphite crucible was transferred into an Acheson furnace, where it was heated at a rate of 4°C/min to 3000°C and subjected to graphitization treatment at such high-temperature for 8 hours, to obtain a graphite anode material.

### Example 5

A method for preparing an anode material of this example included following steps.
(1) A petroleum coke raw material was crushed and shaped with a shaping device to obtain a crushed and shaped coke powder with a median particle size of 15µm.
(2) The coke powder was uniformly mixed with epoxy resin binder to obtain a mixture, a mass ratio of the coke powder to the binder is controlled to 100:7, and the mixture was carbonized at 1000°C for 10 hours.
(3) The carbonized product was oxidized in an air atmosphere at 500°C for 4 hours to obtain a precursor.
(4) The precursor was loaded into a graphite crucible, and then the graphite crucible was transferred into an Acheson furnace, where it was heated at a rate of 3°C/min to 3000°C and subjected to graphitization treatment at such high-temperature for 8 hours, to obtain a graphite anode material.

### Example 6

A method for preparing an anode material of this example included following steps.
(1) A petroleum coke raw material was crushed and shaped with a shaping device to obtain a crushed and shaped coke powder with a median particle size of 15µm.
(2) The coke powder was uniformly mixed with coumarone resin binder to obtain a mixture, a mass ratio of the coke powder to the binder is controlled to 100:5, and the mixture was carbonized at 800°C for 10 hours.
(3) The carbonized product was oxidized in an air atmosphere at 400°C for 4 hours to obtain a precursor.
(4) The precursor was loaded into a graphite crucible, and then the graphite crucible was transferred into an Acheson furnace, where it was heated at a rate of 2°C/min to 2900°C and subjected to graphitization treatment at such high-temperature for 8 hours, to obtain a graphite anode material.

### Example 7

A method for preparing an anode material of this example included following steps.
(1) A petroleum coke raw material was crushed and shaped with a shaping device to obtain a crushed and shaped coke powder with a median particle size of 15µm.
(2) The coke powder was uniformly mixed with furan resin binder to obtain a mixture, a mass ratio of the coke powder to the binder is controlled to 100:3, and the mixture was carbonized at 500°C for 10 hours.
(3) The carbonized product was oxidized in an air atmosphere at 300°C for 2 hours to obtain a precursor.
(4) The precursor was loaded into a graphite crucible, and then the graphite crucible was transferred into an Acheson furnace, where it was heated at a rate of 7°C/min to 3000°C and subjected to graphitization treatment at such high-temperature for 8 hours, to obtain a graphite anode material.

### Example 8

It differs from Example 1 only in that the raw material used in step (1) was needle coke.

### Example 9

It differs from Example 2 only in that the raw material used in step (1) was needle coke.

### Example 10

It differs from Example 3 only in that the raw material used in step (1) was needle coke.

### Example 11

It differs from Example 4 only in that the raw material used in step (1) was needle coke.

### Example 12

It differs from Example 5 only in that the raw material used in step (1) was needle coke.

### Example 13

It differs from Example 6 only in that the raw material used in step (1) was needle coke.

### Example 14

It differs from Example 7 only in that the raw material used in step (1) was needle coke.

### Example 15

It differs from Example 1 only in that the raw material used in step (1) was asphalt coke.

### Example 16

It differs from Example 2 only in that the raw material used in step (1) was asphalt coke.

### Example 17

It differs from Example 3 only in that the raw material used in step (1) was asphalt coke.

### Example 18

It differs from Example 4 only in that the raw material used in step (1) was asphalt coke.

### Example 19

It differs from Example 5 only in that the raw material used in step (1) was asphalt coke.

### Example 20

It differs from Example 6 only in that the raw material used in step (1) was asphalt coke.

### Comparative Example 1

(1) A petroleum coke raw material was crushed and shaped with a shaping device to obtain a crushed and shaped coke powder with a median particle size of 15µm.
(2) The coke powder was uniformly mixed with a coal asphalt binder to obtain a mixture, a mass ratio of the coke powder to the binder is controlled to 100:15, and the mixture was carbonized at 1200°C for 10 hours.
(3) The carbonized product was oxidized in an air atmosphere at 600°C for 15 hours to obtain a precursor.
(4) The precursor was loaded into a graphite crucible, and then the graphite crucible was transferred into an Acheson furnace, where it was heated at a rate of 10°C/min to 3000°C and subjected to graphitization treatment at such high-temperature for 8 hours, to obtain a graphite anode material.

### Comparative Example 2

A raw material of Daqing petroleum coke was crushed and shaped by a shaping device to obtain crushed and shaped coke powder with a median particle size of 15µm. The coke powder was directly loaded into a graphite crucible, and then the graphite crucible was transferred into an Acheson furnace for high-temperature graphitization to obtain an anode material. The heating rate of the graphitization process is 4°C/min, with a maximum temperature of 2900°C and a holding time of the maximum temperature of 8 hours.

### Test Methods

(1) Test method for particle size of anode material
   A particle size distribution range of the composite anode material was tested by a Markov laser particle size meter.
(2) Test method for pore volume of anode material
   The pore volume V is tested by ASAP2460 device from American Micromeritics, and calculated in a pore size range of 17Å to 3000Å by using a model of BJH Desortation cumulative volume of pores.
(3) Test method for specific surface area of anode material
   A dynamic specific surface area rapid tester JW-DX with a unit m²/g from Beijing JWGB Sci & Tech Ltd was used for testing.
(4) Test method for surface morphology of anode material
   The surface morphology of anode material particles was observed by a Hitachi S4800 scanning electron microscope.
(5) Test method for oil absorption value of anode material
   An ASAHI S-500 oil absorption value tester from Japan ASAHISOUKEN was used for testing, and the oil absorption value O was the amount of flaxseed oil dropped when a torque generated by viscosity characteristic changes reached 70% of a maximum torque, with the unit mL/100g.
(6) A crystal plane spacing d₀₀₂ of a surface (002) of the material was characterized by X-ray diffraction, with the unit Å. A crystal plane stacking thickness Lc and a ratio I₀₀₄/I₁₁₀ of peak intensity of a surface (004) to peak intensity of a surface (110) were solved by the X-ray diffraction.
(7) Test method for powder porosity of anode material
   An AutoPore V series high-performance full-automatic mercury pressure instrument from Maxorike Micromeritics Company was used for testing.
(8) Test method for battery performance

The anode material, carboxymethyl cellulose, conductive carbon black and styrenebutadiene rubber prepared in Examples 1 to 20 and Comparative Examples 1 to 2 were magnetically stirred in deionized water at a mass ratio of 95:1.5:1.5:2 for 8 hours to be uniformly mixed. The mixed slurry was coated on copper foil and dried under vacuum at 60 °C as a working electrode. Metal lithium was used as a counter electrode and a reference electrode. A diaphragm was Celgard2325. An electrolyte was 1mol·L-1LiPF6-EC (ethylene carbonate)/DMC (dimethyl carbonate)/EMC (ethyl methyl carbonate) (volume ratio is 1:1:1), and CR2016 coil battery assembly was achieved in a glove box filled with high-purity argon.

Capacity/initial efficiency test was performed on a LAND battery tester, and charging and discharging conditions were as follows: rest for 2 hours; discharging: 0.1C to 0.005V, 0.09C, 0.08C, ..., 0.02C to 0.001V; rest for 15min; charging: 0.1C to 1.5V; and rest for 15min.

A coin half-battery was tested for the rate performance at 25±2°C to obtain a charge discharge specific capacity and a coulombic efficiency of 0.2C, 1C and 2C. The charging and discharging conditions were tested for the coin battery: ① discharging at a rate of 0.1C to 0.01V, keeping a constant voltage for 5 hours, then charging at a rate of 0.1C to 1.5V; ② discharging at a rate of 0.2C to 0.01V, keeping a constant voltage to 0.01C, then charging at a rate of 0.2C to 1.5V; ③ discharging at a rate of 0.2C to 0.01V, keeping a constant voltage to 0.01C, then charging at a rate of 2C to 1.5V; ④ discharging at a rate of 0.2C to 0.01V, keeping a constant voltage to 0.01C, then charging at a rate of 0.2C to 1.5V; ⑤ discharging at a rate of 1C to 0.01V, keeping a constant voltage to 0.01C, then charging at a rate of 0.2C to 1.5V; and ⑥ discharging at a rate of 2C to 0.01V.

Full battery test: the anode material prepared in each example was used as an anode active material. The anode active material, a conductive agent, the binder, and the dispersant were dissolved and mixed in deionized water according to a mass percentage of 95.2:1.5:2:1.3, with a controlled solid content of 50wt%, then coated on a copper foil current collector with a thickness of 8µm, and dried in vacuum to prepare an anode plate. Lithium iron phosphate, polyvinylidene fluoride and conductive agent carbon black were uniformly mixed with a solvent NMP (N-methylpyrrolidone) according to a mass ratio of 95:2:3, then coated on an aluminum foil with a thickness of 16µm, and dried in vacuum to prepare a positive electrode plate. The coated positive electrode plate and the coated anode plate were processed steps including slicing, winding, drying, liquid injection, sealing, formation and volume separation to produce a 554065-type soft package lithium ion battery.

The obtained soft package battery was charged and discharged on a LAND battery test system of Wuhan Kono Electronics Co., Ltd. Under normal temperature conditions, charging and discharging are conducted at a rate of 1C/1C. The charge and discharge voltage was controlled to 3.0V to 4.35V, and first effect and 500 cycles capacity retention rate tests was conducted (the compaction density of the anode plate was 1.60g/cm³).

Tablet absorption test: by using a JS-24FS powder tablet press, a powder sample was formulated into a slurry, followed by drying, grinding, and sieving, and then pressed into a plate under a pressure of 4400 pounds. Liquid absorption time of the tablet was tested after rebounding for 8 hours.

The performance test results of the anode material obtained in the above examples are shown in Table 1 below, and the performance test results of the battery made of the anode material are shown in Table 2 below:

**Table 1. Comparison Result of Performances of Anode Materials**

| Sample | Pore Volume V (cm³/kg) | Specific Surface Area S (m²/g) | Oil Absorpti on Value O (mL/100 g) | O*V*S | D₅₀ (µm) | I₀₀₄/I₁₁₀ | d₀₀₂ (Å) | Lc(Å) | Φ (%) |
|---|---|---|---|---|---|---|---|---|---|
| S1 | 5.012 | 1.781 | 46.3 | 389.4 | 15.65 | 4.676 | 3.3602 | 442.9 | 56.8 |
| S2 | 4.849 | 1.713 | 46.9 | 389.6 | 15.87 | 4.562 | 3.3608 | 420.8 | 56.2 |
| S3 | 4.614 | 1.664 | 49.3 | 378.5 | 16.22 | 3.975 | 3.3611 | 443.7 | 57.6 |
| S4 | 4.429 | 1.598 | 55.1 | 390.0 | 17.56 | 4.102 | 3.3607 | 463.8 | 55.1 |
| S5 | 4.203 | 1.554 | 48.1 | 314.2 | 16.36 | 4.087 | 3.3613 | 445.8 | 52.8 |
| S6 | 4.054 | 1.501 | 62.1 | 377.9 | 16.87 | 3.887 | 3.3624 | 468.1 | 53.4 |
| S7 | 3.875 | 1.445 | 47.6 | 266.5 | 15.23 | 3.921 | 3.3618 | 448.3 | 55.2 |
| S8 | 3.612 | 1.398 | 47.1 | 237.8 | 16.02 | 4.042 | 3.3615 | 450.8 | 56.1 |
| S9 | 3.525 | 1.367 | 39.9 | 192.3 | 17.43 | 3.673 | 3.3622 | 456.3 | 52.2 |
| S10 | 3.443 | 1.327 | 35.9 | 164.0 | 17.71 | 3.342 | 3.3626 | 462.5 | 47.8 |
| S11 | 2.598 | 1.308 | 45.7 | 155.3 | 16.86 | 4.011 | 3.3615 | 471.3 | 50.6 |
| S12 | 2.807 | 1.35 | 35.2 | 133.4 | 16.29 | 3.145 | 3.3604 | 466.7 | 45.5 |
| S13 | 2.874 | 1.179 | 34.8 | 117.9 | 17.89 | 2.783 | 3.3623 | 488.2 | 47.5 |
| S14 | 2.755 | 1.125 | 34.1 | 105.7 | 16.84 | 2.765 | 3.3613 | 482.5 | 48.3 |
| S15 | 2.675 | 1.106 | 33.8 | 100.0 | 15.66 | 2.894 | 3.3618 | 494.1 | 42.1 |
| S16 | 2.436 | 1.007 | 33.3 | 81.7 | 15.28 | 2.562 | 3.3609 | 488.1 | 51.3 |
| S17 | 2.224 | 0.966 | 32.7 | 70.3 | 15.44 | 3.012 | 3.3615 | 470.4 | 41.1 |
| S18 | 2.003 | 0.912 | 31.8 | 58.1 | 15.87 | 1.863 | 3.3619 | 481.5 | 52.2 |
| S19 | 1.945 | 0.894 | 31.2 | 54.3 | 15.67 | 1.942 | 3.3622 | 480.6 | 45.9 |
| S20 | 1.897 | 0.879 | 30.3 | 50.5 | 16.32 | 2.113 | 3.3618 | 472.2 | 44.5 |
| D1 | 7.56 | 3.01 | 66.3 | 1508.7 | 16.88 | 4.921 | 3.3612 | 443.5 | 43.3 |
| D2 | 1.22 | 0.68 | 27.9 | 23.1 | 17.21 | 2.014 | 3.3623 | 477.8 | 38.5 |

**Table 2. Comparison Result of Battery Performances**

| Sample | Specific Capacity (mAh/g) | First Coulombic Efficiency (%) | 1C/0.2C Capacity Retention (%) | 2C/0.2C Capacity Retention (%) | Absorption Time (4400 lbs, s) |
|---|---|---|---|---|---|
| S1 | 356.8 | 95.3 | 62.2 | 22.3 | 12.4 |
| S2 | 355.9 | 94.5 | 62.6 | 22.6 | 10.7 |
| S3 | 356.4 | 94.1 | 63.4 | 23.4 | 9.9 |
| S4 | 357.2 | 94.9 | 63.8 | 23.7 | 8.4 |
| S5 | 357.4 | 94.3 | 64.3 | 24.5 | 8.2 |
| S6 | 358.1 | 94.4 | 65.5 | 24.8 | 7.5 |
| S7 | 358.3 | 94.7 | 66.1 | 24.7 | 6.8 |
| S8 | 356.6 | 95.6 | 64.2 | 22.8 | 11.9 |
| S9 | 355.9 | 95.2 | 65.1 | 23.4 | 10.6 |
| S10 | 356.2 | 95.4 | 65.5 | 23.7 | 9.7 |
| S11 | 358.4 | 94.5 | 65.9 | 24.1 | 8.8 |
| S12 | 358.6 | 94.3 | 66.2 | 24.4 | 7.7 |
| S13 | 360.4 | 95.1 | 66.4 | 24.5 | 7.2 |
| S14 | 361.5 | 95.9 | 66.6 | 24.1 | 6.6 |
| S15 | 364.2 | 95.8 | 62.5 | 22.3 | 11.9 |
| S16 | 362.7 | 95.2 | 62.8 | 22.8 | 10.4 |
| S17 | 363.7 | 94.6 | 63.3 | 23.1 | 10.6 |
| S18 | 364.2 | 94.4 | 63.7 | 23.5 | 9.3 |
| S19 | 363.5 | 95.4 | 65.3 | 24.2 | 8.6 |
| S20 | 360.3 | 95.7 | 65.9 | 24.7 | 7.2 |
| D1 | 358.6 | 90.5 | 57.8 | 18.2 | 14.3 |
| D2 | 342.3 | 93.8 | 56.9 | 17.7 | 22.4 |

According to the test data of Examples 1 to 20, it can be seen that an interior and/or a surface of the graphite prepared in an example of the present disclosure has pores, thereby improving the high-rate charging performance of the material. This is because when the anode material is made into an electrode and applied to a lithium ion battery, the effective electrochemical reaction space inside the material is sufficient after the electrolyte is injected, which is beneficial to improving the rate performance of the anode material.

By controlling the powder porosity of the anode material to be 40% to 58%, the powder porosity of the material is controlled within the range of 50≤O*V*S≤391, so that the compaction density of the graphite anode plate is improved, the sufficient infiltration degree of the graphite particles and the electrolyte is improved, the lithium ions are rapidly transmitted inside the graphite through surface and internal pore pathways, and the polarization caused by the excessive electrolyte adsorption and infiltration on the surface is reduced, thereby achieving the better performance of the graphite anode plate.

The anode material prepared in Comparative Example 1 has an excessively large pore volume, and an excessively large oil absorption value O, resulting in O*V*S deviating from the above range. After the pores between the particles are infiltrated, a solid electrolyte interface is formed on the surfaces of the particles while the surface adsorption and lithium storage are formed, and more electrolyte cations are aggregated on the surfaces of the graphite particles to generate the concentration polarization, so that the diffusion of the lithium ions is inhibited. Therefore, the surfaces of the lithium ions naturally cannot generate electrochemical reactions, so that an "effective electrochemical reaction space" of the anode material is reduced, thereby resulting in the poor cycle performance of the material.

In the preparation process of the anode material prepared in Comparative Example 2, the raw coke material was carbonized and not oxidized, but directly graphitized, resulting in insufficient artificial graphite pores, a small pore volume V, and a decrease in the specific surface area. O*V*S deviates from the above range, and the lithium ions do not have sufficient diffusion pathways, which is not conducive to improving the rate performance of the anode material.

Although the present disclosure is disclosed above in terms of preferred examples, it is not intended to limit the claims, and several possible changes and modifications can be made by any those skilled in the art without departing from the concept of the present disclosure, so the protection scope of the present disclosure should be defined by the claims of the present disclosure.

## Claims

1. An anode material, comprising graphite, an interior and/or a surface of the graphite has pores, the anode material has an oil absorption value of O mL/100g, a pore volume of V cm³/kg, a specific surface area of S m²/g, and a powder porosity of Φ%, where 50≤O*V*S≤391, and 40≤Φ≤58, and the pore volume is tested by ASAP2460 device from American Micromeritics, and calculated in a pore size range of 17Å to 3000Å by using a model of BJH Desortation cumulative volume of pores.

2. The anode material according to claim 1, wherein the oil absorption value of the anode material is O mL/100g, where 30≤O≤62.

3. The anode material according to claim 1, wherein the pore volume of the anode material is V cm³/kg, where 1.812≤V≤5.012.

4. The anode material according to claim 1, wherein the specific surface area of the anode material is S m²/g, where 0.872≤S≤1.781.

5. The anode material according to claim 1, wherein a particle size of the anode material satisfies a following relational expression: 12µm≤D₅₀≤20µm.

6. The anode material according to any one of claims 1 to 5, wherein the anode material further comprises amorphous carbon, and the amorphous carbon is located on the surface of the graphite and/or dispersed between graphite particles.

7. The anode material according to claim 6, wherein the anode material satisfies at least one of following features:
(1) a mass proportion of the amorphous carbon in the anode material is 0.1wt% to 5wt%;
(2) the anode material comprises artificial graphite primary particles and/or artificial graphite secondary particles; and
(3) the pores comprise at least one of micro-pores and meso-pores.

8. The anode material according to any one of claims 1 to 5, wherein the anode material has a crystal plane spacing d₀₀₂ of a plane (002) of a graphite crystal determined by X-ray diffraction, where 3.358Å≤d₀₀₂≤3.365Å, and a crystal plane stacking thickness Lc obtained by the X-ray diffraction is 400 Å to 450 Å.

9. The anode material according to any one of claims 1 to 5, wherein the anode material has a ratio of integrated intensity I₀₀₄ of a peak on a plane (004) of the anode material to integrated intensity I₁₁₀ of a peak on a plane (110) of the anode material, determined by X-ray diffraction, and a following relational expression is satisfied: 1.0≤I₀₀₄/I₁₁₀≤5.0.

10. A battery, comprising an anode material according to any one of claims 1 to 9.
